# FASCICULE DE BREVET EUROPEEN

(11) **EP 2 265 467 B1**
(45) Date de publication et mention de la délivrance du brevet: **18.01.2012**
(21) Numéro de dépôt: 09745931.7
(22) Date de dépôt: 15.04.2009
(51) Int. Cl.: B60R 19/48, H01Q 1/32, B60R 13/10

(54) **DISPOSITIF DE FIXATION D'UNE PLAQUE SUR UN VEHICULE AUTOMOBILE ET BOUCLIER DE VEHICULE AUTOMOBILE COMPORTANT UN TEL DISPOSITIF**
VORRICHTUNG ZUR BEFESTIGUNG EINER PLATTE AUF EINEM AUTOMOBIL UND AUTOMOBILABSCHIRMUNG MIT EINER SOLCHEN VORRICHTUNG
DEVICE FOR ATTACHING A PLATE ON AN AUTOMOBILE AND AUTOMOBILE SHIELD INCLUDING SUCH A DEVICE

(30) Priorité: 18.04.2008 FR 0802183
(43) Date de publication de la demande: 29.12.2010
(73) Titulaire: Renault s.a.s., 92100 Boulogne-Billancourt (FR)
(72) Inventeur: TARENBERQUE, Eric, F-91570 Bievres (FR); HELLER, Renaud, F-75017 Paris (FR); RAINOTTE, Christian, F-92500 Rueil Malmaison (FR); BRICHET, Christophe, F-25405 Audincourt (FR)
(86) Numéro de dépôt international: PCT/FR2009/050687
(87) Numéro de publication internationale: WO 2009/138612

(56) Documents cités:
- DE-A1- 19 637 867
- DE-U1- 9 310 156
- DE-U1- 9 410 426
- DE-U1- 29 603 693
- STERZER F: "AN ELECTRONIC LICENSE PLATE FOR MOTOR VEHICLES" 19740601, vol. 35, no. 2, 1 juin 1974 (1974-06-01), pages 167-175, XP002050078

## Description

La présente invention se rapporte à un bouclier intégrant un support d'antenne.

DE 93 10 156 U décrit un dispositif de fixation d'une plaque minéralogique destiné à être fixé sur bouclier de véhicule, le dispositif qui est en matière plastique moulée, intègre un dispositif de fixation de la plaque, ladite plaque étant sensiblement rectangulaire et comportant une zone centrale et deux zones de fixation latérales, ledit dispositif de fixation comportant :
- un corps
- deux portions de support, en matière plastique moulée, disposées sensiblement dans un même plan, lesdites portions de support étant distantes l'une de l'autre et aptes à recevoir en appui une desdites zones de fixation de ladite plaque de manière à ce que ladite zone centrale s'étende entre lesdites portion de support, lesdites portions de support comportant en outre, des premiers moyens d'accrochage;
- deux flancs de fixation en matière plastique, qui sont connectés chacun à une desdites portions de support par l'intermédiaire d'une bande amincie qui permet le pliage dudit flanc vers ladite portion de support, chacun desdits flancs étant ainsi mobile entre une position étalée, dans laquelle il est disposé sensiblement dans le même plan que lesdites portions de support et une position repliée vers ladite portion de support dans laquelle il recouvre au moins partiellement ladite portion de support
et chacun desdits flancs comporte des seconds moyens d'accrochage qui sont aptes à coopérer avec lesdits premiers moyens d'accrochage de chacune desdites portions de support pour maintenir ledit flanc dans sa position repliée.

Les véhicules actuels comportent des ouvrants qui peuvent être déverrouillés à distance par l'intermédiaire d'une télécommande (clé ou carte).

Le véhicule possède donc, pour ce faire, plusieurs antennes réceptrices qui permettent l'ouverture à distance des ouvrants.

Le document DE 196 36 584 décrit un pare choc ou bouclier de véhicule automobile qui comporte une antenne sous forme de câble. Ce câble formant antenne court à l'intérieur du bouclier et est protégé par ce dernier.

Il existe également des antennes sous forme de plaque comme décrites dans le document DE 102 006 011 086, notamment, qui sont intégrées dans les poignées de porte, par exemple.

Un but de la présente invention est de proposer un bouclier intégrant un nouveau dispositif de fixation d'une plaque sur un véhicule automobile.

Ce but est atteint au moyen d'un bouclier selon la revendication 1.

Le dispositif étant en matière plastique moulée, il est simple à réaliser d'une seule pièce. Par ailleurs, la plaque étant une antenne, la matière plastique présente l'avantage de ne générer aucune gêne pour la réception des ondes émises par la télécommande.

Selon un mode de réalisation, ladite plaque comportant au niveau d'au moins une desdites zones de fixation, des premiers moyens de positionnement, au moins une desdites portions de support comporte des seconds moyens de positionnement qui sont aptes à coopérer avec lesdits premiers moyens de positionnement pour positionner ladite plaque avant le repli et l'accroche desdits flancs sur lesdites portions de support.

Selon un mode de réalisation particulier, lesdits premiers/seconds moyens d'accrochage comportent des crochets et lesdits seconds/premiers moyens d'accrochage comportent des fentes dans lesquelles lesdits crochets peuvent être encliquetés élastiquement.

Selon l'invention, ledit corps fait partie intégrante d'un élément de véhicule automobile en matière plastique moulée. Ainsi, la fabrication du dispositif de l'invention est mise en oeuvre en même temps que la fabrication de cet élément de véhicule automobile.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 représente une vue en coupe longitudinale d'un mode de réalisation particulier du dispositif de l'invention, avant le repli des flancs de fixation ;
- la Figure 2 représente une vue en coupe longitudinale du dispositif de la figure 1, après le repli des flancs de fixation ;
- la Figure 3 représente un mode de réalisation particulier des premiers et seconds moyens d'accrochage du dispositif de l'invention ;
- la Figure 4 représente une vue en perspective partielle d'un mode de réalisation particulier d'un bouclier selon l'invention ; et
- la Figure 5 représente une vue en perspective d'un mode de réalisation particulier d'un bouclier selon l'invention ;

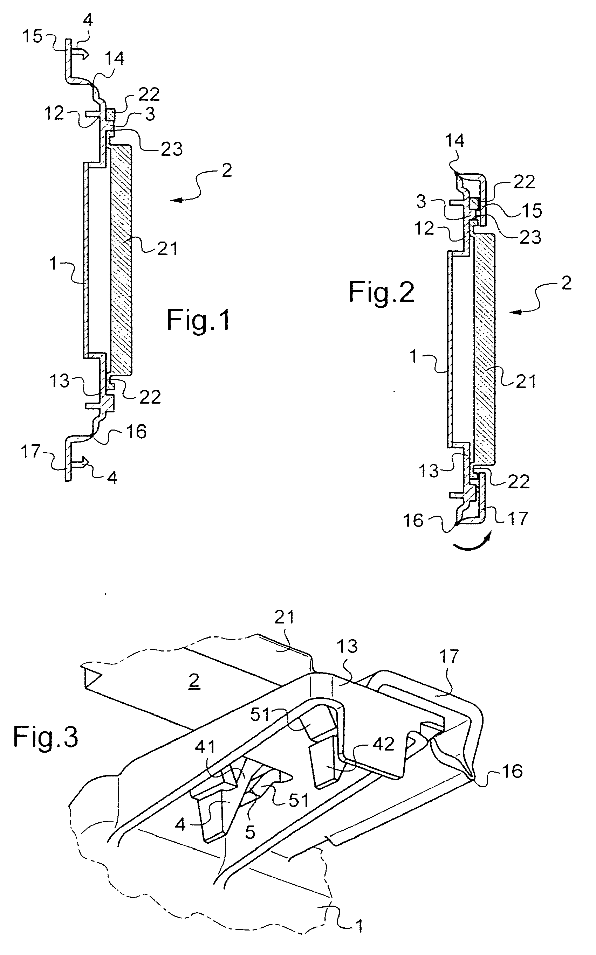

Comme représenté sur la figure 1, le dispositif de fixation selon l'invention comporte un corps 1 qui relie deux portions de support, respectivement 12 et 13. Une plaque 2, sensiblement rectangulaire qui comporte une zone centrale 21 et deux zones de fixation 22, latérales à la zone centrale 21, est montée sur le dispositif de l'invention. Dans la position de montage, chacune des zones de fixation 22 vient en contact avec une des portions de support 12 et 13. La zone centrale 21 s'étend entre les deux portions de support 12 et 13, parallèlement au corps 1 mais à distance de ce dernier. La portion de support 12 comporte un plot de positionnement 3 qui coopère avec une ouverture 23, ménagée dans la zone de fixation 22 qui prend appui sur la portion de support 12. Le plot 3 est ainsi inséré dans l'ouverture 23 de la plaque 2, ce qui permet de positionner la plaque 2 sur le dispositif de fixation et de la maintenir dans une position ad hoc dans laquelle elle sera immobilisée par la suite, lors de sa fixation. Les deux portions de support 12 et 13 se prolongent longitudinalement, dans une direction parallèle au corps 1, chacune par un flanc de fixation, respectivement 15 et 17. Ces deux flancs de fixation 15 et 17 sont en matière plastique et sont reliés aux portions de support 12 et 13 par des bandes amincies 14 et 16, en matière plastique, qui permettent de replier les flancs de fixation 15 et 17 sur les portions de support 12 et 13. Dans leur position étalée, représentée sur la figure 1, les deux flancs de fixation 15 et 17 prolongent longitudinalement chacune des portions de support 12 et 13, parallèlement au corps 1. Le bord libre des flancs de fixation 15 et 17 comporte un crochet 4 qui sera plus amplement décrit en référence à la figure 3.

A la figure 2, les deux flancs de fixation 15 et 17 sont repliés sur les portions de support 12 et 13. Dans cette position repliée des deux flancs de fixation 15 et 17, les deux zones de fixation latérales 22 de la plaque 2 sont pincées et prises en sandwich, chacune entre un des flancs 15 et 17 et l'une des portions de support 12 et 13.

La figure 3 représente un mode de réalisation particulier des premiers et seconds moyens d'accrochage du dispositif de l'invention. Sur la figure 3, seul le flanc de fixation 17 et la portion de support 13 sont représentés mais il va de soi que les mêmes moyens d'accrochage peuvent équiper le flanc de fixation 15. Le bord libre du flanc de fixation 17 comporte deux crochets 4. Chaque crochet 4 comporte une tige 41, reliée au flanc de fixation 17 et qui s'étend selon une direction perpendiculaire au plan du flanc 17. L'extrémité de la tige 41 se termine par une tête 42 qui forme une butée qui s'étend selon une direction perpendiculaire à la tige 41 (sensiblement parallèlement au plan du flanc 17). La portion de support 13 comporte des pattes 51 qui s'étendent sous la portion de support 13 et qui délimitent des fentes 5 ou ouvertures qui sont aptes à recevoir les crochets 4. Ces fentes 5 s'étendent perpendiculairement au corps 1 et sont situées dans un plan parallèle à la portion de support 13. Lorsque le flanc 17 est replié vers la portion de support 13, la tête 42 du crochet 4 pénètre dans une des fentes 5. Pour ce faire, la tête 42 se déforme et s'écrase de manière à traverser la fente 5. Lorsque la tête 42 arrive de l'autre côté de la fente 5, elle retrouve élastiquement sa forme. La tête 42 qui vient en butée contre le bord de la fente 5 et empêche ainsi le retrait du crochet 4 hors de la fente 5.

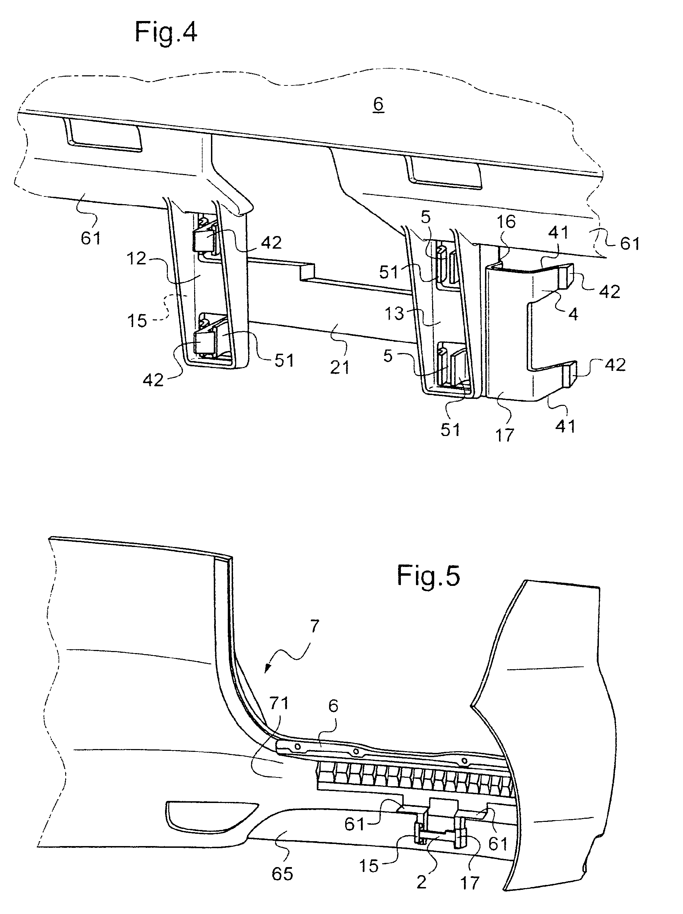

La figure 4 représente un renfort de bouclier arrière 6 qui comporte le dispositif de fixation de l'invention. Les éléments qui sont en commun avec le mode de réalisation représenté sur les figures 1 et 2 sont référencés à l'identique. Le renfort de bouclier 6 comporte un bord libre 61 ou une portion de bord libre. Les parties de support 12 et 13 sont fixées sur ce bord libre 61. Dans le cas présent, les parties de support 12 et 13 dépassent du bord libre 61 et sont sensiblement perpendiculaires à ce dernier. Dans ce cas, le renfort de bouclier 6 fait office de corps supportant les deux portions de support 12 et 13. Les deux flancs de fixation 15 et 17 sont également perpendiculaires au bord 61 et se plient selon des directions parallèles et perpendiculaires au bord 61. Le flanc 17 est représenté replié tandis que le flanc 15 est représenté dans sa position étalée, dans laquelle il prolonge la portion de support 13, parallèlement au bord 61.

La figure 5 représente un bouclier selon l'invention. Ce bouclier 7 comporte le renfort de bouclier 6 représenté sur la figure 4. Le renfort 6 est supporté par un support 65 et l'ensemble support 65 et renfort de bouclier 6 forme le bouclier 7. Le bouclier 7 comporte une face interne 71 orientée vers la caisse du véhicule auquel il est fixé et une face externe opposée qui reçoit les chocs. La plaque 2 ainsi que le dispositif de fixation selon l'invention, sont disposés sur la face interne 71 du bouclier 7. Ainsi ils sont protégés des chocs et autres par le bouclier 7 lui-même. Le bouclier est en matière plastique moulée ce qui permet de former rapidement et simplement le dispositif de fixation de l'invention, lors de l'étape de fabrication du bouclier lui-même. Le dispositif de fixation et la plaque 2 pendent donc au delà du renfort de bouclier 6 et viennent se loger dans le support 65.

La plaque 2 est une antenne dont la partie centrale est réceptrice. Dans le cas présent, le bouclier et le dispositif de fixation étant en matière plastique, les interférences sont minimes voire inexistantes.

## Revendications

1. Bouclier de véhicule automobile (7), en matière plastique moulée qui comporte un renfort de bouclier (6) et un élément formant antenne (2), ledit renfort de bouclier (6) comportant une portion de bord libre (61), le bouclier intégrant un dispositif de fixation d'une plaque (2) qui est formé lors de l'étape de fabrication dudit bouclier lui-même, ladite plaque (2) étant sensiblement rectangulaire et comportant une zone centrale (21) comportant ledit élément formant antenne (2) et deux zones de fixation latérales (22), ledit dispositif de fixation comportant :
- un corps (6) qui fait partie intégrante dudit bouclier (7) ;
- deux portions de support (12 ; 13), en matière plastique moulée, disposées sensiblement dans un même plan, lesdites portions de support (12 ; 13) étant distantes l'une de l'autre et aptes à recevoir en appui une desdites zones de fixation (22) de ladite plaque (2) de manière à ce que ladite zone centrale (21) s'étende entre lesdites portion de support (12 ; 13), lesdites portions de support (12 ; 13) comportant en outre, des premiers moyens d'accrochage (5) et les deux portions de support (12; 13) étant fixées sur ledit bord libre (61) du renfort de bouclier (6),
- deux flancs de fixation (15 ; 17), en matière plastique, qui sont connectés chacun à une desdites portions de support (12 ; 13) par l'intermédiaire d'une bande amincie (14 ; 16) qui permet le pliage dudit flanc (15 ; 17) vers ladite portion de support (12 ; 13), chacun desdits flancs (15 ; 17) étant ainsi mobile entre une position étalée, dans laquelle il est disposé sensiblement dans le même plan que lesdites portions de support (12 ; 13) et une position repliée vers ladite portion de support (12 ; 13), dans laquelle il recouvre au moins partiellement ladite portion de support (12 ; 13);
et chacun desdits flancs (15 ; 17) comportant des seconds moyens d'accrochage (4) qui sont aptes à coopérer avec lesdits premiers moyens d'accrochage (5) de chacune desdites portions de support (12 ; 13) pour maintenir ledit flanc (15 ; 17) dans sa position repliée.

2. Bouclier selon l'une revendications précédentes, **caractérisé en ce que** ladite plaque (2) comportant au niveau d'au moins une desdites zones de fixation (22), des premiers moyens de positionnement (23), au moins une desdites portions de support (12 ; 13) comporte des seconds moyens de positionnement (3) qui sont aptes à coopérer avec lesdits premiers moyens de positionnement (23) pour positionner ladite plaque (2) avant le repli et l'accroche desdits flancs de fixation (15 ; 17) sur lesdites portions de support (12 ; 13).

3. Bouclier (7) selon l'une quelconque des revendications précédentes, **caractérisé en ce que** lesdits premiers/seconds moyens d'accrochage comportent des crochets (4) et **en ce que** lesdits seconds/premiers moyens d'accrochage comportent des fentes (5) dans lesquelles lesdits crochets (4) peuvent être encliquetés élastiquement.

4. Bouclier selon l'une quelconque des revendications précédentes **caractérisé en ce que** ledit bouclier est formé d'un ensemble support (65) et du renfort de bouclier (6), le renfort étant supporté par le support (65); le bouclier (6) comportant une face interne (71) orientée vers la caisse du véhicule auquel il est fixé et une face externe opposée qui reçoit les chocs; la plaque (2) ainsi que le dispositif de fixation étant disposés sur la face interne (71) du bouclier.

## Claims

1. Motor vehicle bumper (7) made of moulded plastic which comprises a bumper reinforcement (6) and an antenna-forming element (2), the said bumper reinforcement (6) comprising a free edge portion (61), the bumper incorporating a device for attaching a plate (2) which is formed during the stage of manufacturing the said bumper itself, the said plate (2) being substantially rectangular and comprising a central zone (21) including the said antenna-forming element (2) and two lateral fixing zones (22), the said fixing device comprising:
- a body (1) which forms an integral part of the said bumper (7);
- two support portions (12; 13), made of moulded plastic, arranged substantially in one and the same plane, the said support portions (12; 13) being distant from one another and able to have one of the said fixing zones (22) of the said plate (2) resting against them so that the said central zone (21) extends between the said support portions (12; 13), the said support portions (12; 13) further comprising first fastening means (5), and the two support portions (12; 13) being fixed to the said free edge (61) of the bumper reinforcement (6),
- two fixing flanks (15; 17), made of plastic, each of which is connected to one of the said support portions (12; 13) via a thinner strip (14; 16) that allows the said flank (15; 17) to be folded over towards the said support portion (12; 13), each of the said flanks (15; 17) thus being able to be moved between a spread-out position in which it is arranged substantially in the same plane as the said support portions (12; 13) and a position folded over towards the said support portion (12; 13), in which position it at least partially covers the said support portion (12; 13);
- and each of the said flanks (15; 17) comprising second fastening means (4) which are designed to collaborate with the said first fastening means (5) of each of the said support portions (12; 13) in order to keep the said flank (15; 17) in its folded-over position.

2. Bumper according to the preceding claim, **characterized in that**, with the said plate (2) comprising, at least at one of the said fixing zones (22), first positioning means (23), at least one of the said support portions (12; 13) comprises second positioning means (3) which are designed to collaborate with the said first positioning means (23) to position the said plate (2) before the said fixing flanks (15; 17) are folded over and fastened to the said support portions (12; 13).

3. Bumper (7) according to either one of the preceding claims, **characterized in that** the said first/second fastening means comprise hooks (4), and **in that** the said second/first fastening means comprise slots (5) into which the said hooks (4) can be clipped elastically.

4. Bumper according to any one of the preceding claims, **characterized in that** the said bumper is formed of a support assembly (65) and of the bumper reinforcement (6), the reinforcement being supported by the support (65); the bumper (6) comprising an internal face (71) directed towards the body shell of the vehicle to which it is fixed, and an opposite external face which receives the impacts; the plate (2) and the fixing device being arranged on the internal face (71) of the bumper.

## Patentansprüche

1. Kraftfahrzeug-Stoßfänger (7) aus formgepresstem Kunststoff, der eine Stoßfängerverstärkung (6) und ein eine Antenne bildendes Element (2) aufweist, wobei die Stoßfängerverstärkung (6) einen freien Randabschnitt (61) aufweist, wobei in den Stoßfänger eine Befestigungsvorrichtung einer Platte (2) integriert ist, die beim Schritt der Herstellung des Stoßfängers selbst geformt wird, wobei die Platte (2) im Wesentlichen rechtwinklig ist und eine zentrale Zone (21), die das eine Antenne formende Element (2) aufweist, und zwei seitliche Befestigungszonen (22) aufweist, wobei die Befestigungsvorrichtung aufweist:
- einen Körper (1), der integrierender Bestandteil des Stoßfängers (7) ist;
- zwei Stützabschnitte (12; 13) aus formgepresstem Kunststoff, die im Wesentlichen in der gleichen Ebene angeordnet sind, wobei die Stützabschnitte (12; 13) einen Abstand zueinander haben und eine der Befestigungszonen (22) der Platte (2) in Auflage aufnehmen können, damit die zentrale Zone (21) sich zwischen den Stützabschnitten (12; 13) erstreckt, wobei die Stützabschnitte (12; 13) außerdem erste Einhakeinrichtungen (5) aufweisen, und die zwei Stützabschnitte (12; 13) am freien Rand (61) der Stoßfängerverstärkung (6) befestigt sind,
- zwei Befestigungsflanken (15; 17) aus Kunststoff, die je mit einem der Stützabschnitte (12; 13) mittels eines verdünnten Streifens (14; 16) verbunden sind, der das Umbiegen der Flanke (15; 17) zum Stützabschnitt (12; 13) erlaubt, wobei jede der Flanken (15; 17) so zwischen einer ausgebreiteten Stellung, in der sie im Wesentlichen in der gleichen Ebene angeordnet ist wie die Stützabschnitte (12; 13), und einer zum Stützabschnitt (12; 13) umgebogenen Stellung beweglich ist, in der sie den Stützabschnitt (12; 13) zumindest teilweise bedeckt;
und jede der Flanken (15; 17) zwei Einhakeinrichtungen (4) aufweist, die mit den ersten Einhakeinrichtungen (5) jedes der Stützabschnitte (12; 13) zusammenwirken können, um die Flanke (15; 17) in ihrer umgebogenen Stellung zu halten.

2. Stoßfänger nach dem vorhergehenden Anspruch, **dadurch gekennzeichnet, dass**, da die Platte (2) im Bereich mindestens einer der Befestigungszonen (22) erste Positioniereinrichtungen (23) aufweist, mindestens einer der Stützabschnitte (12; 13) zweite Positioniereinrichtungen (3) aufweist, die mit den ersten Positioniereinrichtungen (23) zusammenwirken können, um die Platte (2) vor dem Umbiegen und dem Einhaken der Befestigungsflanken (15, 17) auf den Stützabschnitten (12; 13) zu positionieren.

3. Stoßfänger (7) nach einem der vorhergehenden Ansprüche, **dadurch gekennzeichnet, dass** die ersten/zweiten Einhakeinrichtungen Haken (4) aufweisen, und dass die zweiten/ersten Einhakeinrichtungen Schlitze (5) aufweisen, in die die Haken (4) elastisch eingerastet werden können.

4. Stoßfänger nach einem der vorhergehenden Ansprüche, **dadurch gekennzeichnet, dass** der Stoßfänger von einer Einheit aus Stütze (65) und Stoßfängerverstärkung (6) geformt wird, wobei die Verstärkung von der Stütze (65) getragen wird; wobei der Stoßfänger (6) eine Innenseite (71), die zum Fahrwerk des Fahrzeugs ausgerichtet ist, an dem er befestigt ist, und eine gegenüberliegende Außenseite aufweist, die die Stöße aufnimmt; wobei die Platte (2) sowie die Befestigungsvorrichtung auf der Innenseite (71) des Stoßfängers angeordnet sind.
